# EUROPÄISCHE PATENTSCHRIFT

(11) **EP 1 005 710 B1**
(45) Veröffentlichungstag und Bekanntmachung des Hinweises auf die Patenterteilung: **30.01.2002**
(21) Anmeldenummer: 98945255.2
(22) Anmeldetag: 17.08.1998
(51) Int. Cl.: H02H 3/33

(54) **FEHLERSTROMSCHUTZSCHALTER**
RESIDUAL CURRENT CIRCUIT-BREAKER
DISJONCTEUR DIFFERENTIEL

(30) Priorität: 22.08.1997 DE 19736656
(43) Veröffentlichungstag der Anmeldung: 07.06.2000
(73) Patentinhaber: AEG Niederspannungstechnik GmbH & Co. KG, 24534 Neumünster (DE)
(72) Erfinder: HEINDORF, Helmut, D-31785 Hameln (DE)
(74) Vertreter: Pellmann, Hans-Bernd, Dipl.-Ing.
(86) Internationale Anmeldenummer: EP9805230
(87) Internationale Veröffentlichungsnummer: WO9910958

(56) Entgegenhaltungen:
- WO-A-96/06475
- DE-C- 19 529 474

## Beschreibung

Die Erfindung bezieht sich auf einen Fehlerstromschutzschalter wie es aus der WO-A-06475 bekannt geworden ist.

Diese zeigt einen Fehlerstromschutzschalter mit
einem Summenstromwandler,
einem mit einer Sekundärwicklung des Summenstromwandlers verbundenen Auslöserelais,
einem Schaltwerk zur Abschaltung der dem Fehlerstromschutzschalter nachgeschalteten Verbraucher bei Betätigung des Auslöserelais und
eines Prüfeinrichtung,
die eine irreversible Abschaltung des Fehlerstromschutzschalters mittels einer Trenneinrichtung veranlaßt, wenn der Fehlerstromschutzschalter nicht innerhalb eines vorbestimmten Zeitintervalles abgeschaltet hat.

Ein solcher Fehlerstromschutzschalter ist der DE 195 29 474 C1 entnehmbar. Bei dem dort gezeigten Gerät wird die Funktionsfähigkeit des Fehlerstromschutzschalters automatisch überwacht. Dabei wird eine Folge von Prüfimpulsen aus einer steuerbaren Konstantstromquelle in vorbestimmten Stufen mit zunehmender Höhe in den Summenstromwandler eingespeist. Gleichzeitig wird die Spule des Auslösers auf das Auftreten eines Induktionsimpulses hin überwacht, der beim Abheben des Ankers des Auslösers aus seiner einen Endlage austritt. Der beim Auftreten des Induktionsimpulses vorhandene Wert des eingespeisten Konstantstromes wird mit einem der einwandfreien Arbeitsweise des Fehlerstromschutzschalters zugeordneten Wert zur Fehlererkennung verglichen. Damit die Prüfimpulse den Fehlerstromschutzschalter nicht auslösen, sondern nur den Anker des Auslöserelais geringfügig abheben, folgt bei dem bekannten Gerät auf jeden Prüfimpuls ein Rückholimpuls, um das Auslöserelais von einer Betätigung des Schaltschlosses abzuhalten.

Ermittelt die dort vorgeschlagene Prüfeinrichtung Auslösewerte, die so hoch sind, daß die Schutzfunktion des Fehlerstromschutzschalters nicht mehr gewährleistet ist, löst die Prüfeinrichtung über den Konstantstromgenerator das Auslöserelais aus und öffnet dadurch das Schaltwerk. Dieser Zustand wird in einem nicht-flüchtigen Speicher der Steuerelektronik abgelegt und führt bei jedem Wiedereinschalten erneut zum Abschalten.

Der Erfindung liegt demgegenüber die Aufgabe zugrunde, den bekannten Fehlerstromschutzschalter derart weiterzubilden, daß die Funktionsfähigkeit des Fehlerstromschutzschalters auch dann gewährleistet bleibt, wenn der Fehlerstromschutzschalter nicht mehr ordnungsgemäß auslöst, wobei gleichzeitig

Der Erfindung liegt demgegenüber die Aufgabe zugrunde, den bekannten Fehlerstromschutzschalter derart weiterzubilden, daß die Funktionsfähigkeit des Fehlerstromschutzschalters auch dann gewährleistet bleibt, wenn der Fehlerstromschutzschalter nicht mehr ordnungsgemäß auslöst, wobei gleichzeitig ein Totalausfall der Schutzfunktion des Fehlerstromschutzschalters sicher vermieden werden soll.

Diese Aufgabe wird durch einen Fehlerstromschutzschalter mit den im Patentanspruch 1 angegebenen Merkmalen auf besonders vorteilhafte Art und Weise gelöst.

Die Prüfeinrichtung des erfindungsgemäßen Fehlerstromschutzschalters veranlaßt dabei eine reversible Abschaltung des Fehlerstromschutzschalters, wenn der Fehlerstromschutzschalter nicht innerhalb eines ersten Zeitintervalles nach Auftreten eines Fehlerstromes abgeschaltet hat, und eine irreversible Abschaltung des Fehlerstromschutzschalters, wenn der Fehlerstromschutzschalter nicht innerhalb eines zweiten Zeitintervalles nach Beendigung des ersten Zeitintervalles abgeschaltet hat.

Durch diese Funktionsweise der Prüfeinrichtung kann ein Betrieb des Fehlerstromschutzschalters auch dann aufrechterhalten werden, wenn die Prüfeinrichtung feststellt, daß das Auslöserelais nicht mehr einwandfrei arbeitet, da im Falle eines Versagens des Auslöserelais die Fehlerstromschutzfunktion von der Prüfeinrichtung übernommen wird. wenn dagegen auch in diesem Fall der Fehlerstromschutzschalter nicht abschaltet, wird nach einem weiteren bzw. einem insgesamt längeren Zeitintervall, das noch in den zulässigen Grenzen liegt, eine irreversible Abschaltung des Fehlerstromschutzschalters veranlaßt.

Vorteilhafte Weiterbildungen der Erfindung sind Gegenstand des Unteransprüche.

Gemäß Unteranspruch 2 führt die Prüfeinrichtung in vorbestimmten Zeitabschnitten automatisch eine Funktionsprüfung des Auslöserelais durch, ohne dabei das Schaltschloß zu betätigen. Durch diese Maßnahme kann die bei Fehlerstromschutzschaltern üblicherweise vorgesehene Prüftaste entfallen.

Gemäß Unteranspruch 3 prüft die Prüfeinrichtung fortlaufend, ob dem Auslöserelais von der Sekundärwicklung ein einen zulässigen Grenzwert übersteigender Fehlerstrom zugeführt wird, wenn es nicht gerade mit dem im Anspruch 2 genannten Selbsttest beschäftigt ist. Hierdurch wird die Prüfeinrichtung in die Lage versetzt, beurteilen zu können, ob der Fehlerstromschutzschalter ordnungsgemäß arbeitet.

Wird dann festgestellt, daß der Fehlerstromschutzschalter nicht ordnungsgemäß arbeitet, veranlaßt die Prüfeinrichtung bei Auftreten eines den Grenzwert übersteigenden Fehlerstroms, wie im Unteranspruch 4 angegeben, die reversible Abschaltung des Fehlerstromschutzschalters, indem sie dem Auslöserelais einen Strom zuführt, der den von der Sekundärwicklung zugeführten Strom übersteigt. Hierdurch kann erreicht werden, daß das Auslöserelais, das bei dem vorbestimmten Fehlerstrom eigentlich nicht mehr auslösen würde, und somit eigentlich funktionsuntüchtig wäre, doch noch auslöst, nachdem der ihm zugeführte Fehlerstrom durch die Prüfeinrichtung sozusagen künstlich erhöht wurde.

Führt aber auch die im Patentanspruch 4 angegebene Maßnahme innerhalb eines vorgegebenen Zeitintervalls nicht zu einer Abschaltung des Fehlerstromschutzschalters, veranlaßt die Prüfeinrichtung, wie im Unteranspruch 5 angegeben, die irreversible Abschaltung des Fehlerstromschutzschalters, indem sie eine Trenneinrichtung betätigt, die die durch den Fehlerstromschutzschalter zu schaltenden Leitungen sprengt, durchschneidet oder auf sonstige Weise unterbricht. Trenneinrichtungen dieser Art sind grundsätzlich aus dem Stand der Technik bekannt, beispielsweise kann eine Mikrosprengkapsel dadurch gezündet werden, daß ihr ein Zündstrom von der Prüfeinrichtung zugeführt wird. Alternativ hierzu können die zu unterbrechenden Leitungen auch elektromechanisch durchgeschnitten oder in sonstiger Weise geschaltet werden.

Wie im Unteranspruch 6 angegeben, umfaßt der erfindungsgemäße Fehlerstromschutzschalter vorteilhafterweise darüber hinaus noch eine Stromversorgungseinrichtung, die die Netzspannung, von dem Schaltwerk her gesehen, verbraucherseitig abgreift und die der Prüfeinrichtung eine Versorgungsspannung anlegt. Hierdurch wird es möglich, daß, wie im Anspruch 7 angegeben, die Prüfeinrichtung anhand des Anliegens der Versorgungsspannung prüfen kann, ob der Fehlerstromschutzschalter abgeschaltet hat oder nicht, da ja von der Stromversorgungseinrichtung die Netzspannung nach dem Schaltwerk abgegriffen wird und somit nicht mehr an der Stromversorgungseinrichtung anliegt, sobald der Fehlerstromschutzschalter abgeschaltet hat. Durch diese Maßnahme ist die Prüfeinrichtung somit zu jedem Zeitpunkt darüber informiert, ob der Fehlerstromschutzschalter noch eingeschaltet ist, und kann dementsprechend prüfen, ob eine der im Anspruch 1 genannten Maßnahmen veranlaßt werden muß.

Wie im Unteranspruch 8 angegeben, wird vorteilhafterweise ein Warnsignal abgegeben, sobald die Prüfeinrichtung ermittelt, daß das Auslöserelais nicht mehr bei einem vorbestimmten Fehlerstrom auslöst und somit nicht mehr ordnungsgemäß arbeitet. Wie oben ausgeführt, wird in diesem Fall der Betrieb des Fehlerstromschutzschalters fortgesetzt, bis er beim Auftreten eines unzulässig hohen Fehlerstroms endgültig ausfällt. Jedoch ist es durch das Warnsignal möglich, wie im Unteranspruch 9 angegeben, eine Anzeige zu setzen, die anzeigt, daß der Fehlerstromschutzschalter ausgetauscht werden muß. Der Betreiber der mit dem Fehlerstromschutzschalter geschützten Anlage bekommt somit frühzeitig, d.h. ab dem Zeitpunkt, zu dem die Funktionstüchtigkeit des Auslöserelais nicht mehr voll gewährleistet ist, die Mitteilung, daß der Fehlerstromschutzschalter nicht mehr ordnungsgemäß arbeitet, weiß aber gleichzeitig, daß er den Fehlerstromschutzschalter noch bis zu seinem Totalausfall weiterbetreiben kann. Hierdurch hat er Zeit, den Fehlerstromschutzschalter dann auszutauschen, wenn es die geschützte Anlage erlaubt, so daß überflüssige Stromausfälle vermieden werden können und dennoch auf die durch den Fehlerstromschutzschalter zur Verfügung gestellte Schutzfunktion nicht verzichtet werden muß.

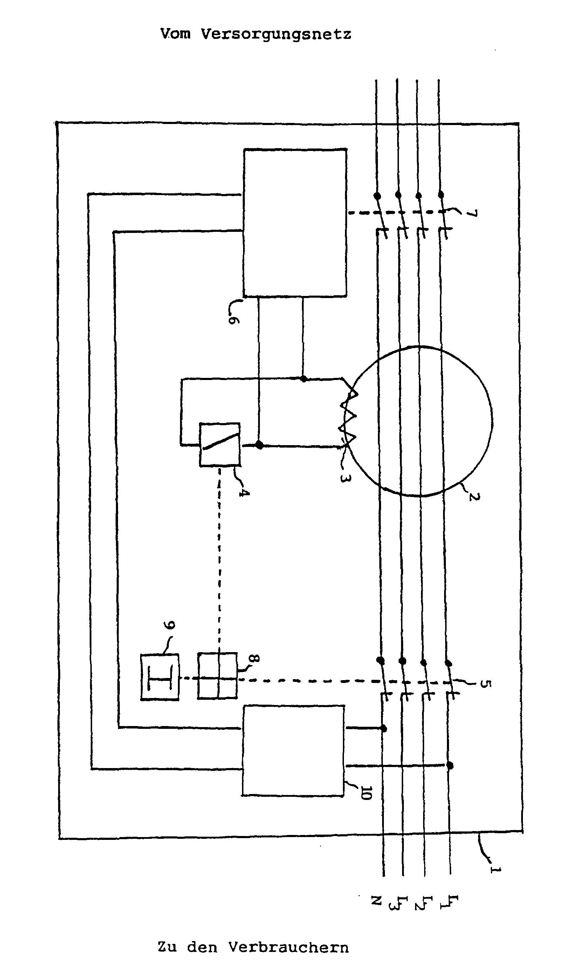

Die Erfindung wird nachfolgend anhand eines Ausführungsbeispiels unter Bezugnahme auf die Zeichnung näher erläutert.

In der Figur ist mit 1 der erfindungsgemäße Fehlerstromschutzschalter, mit 2 ein Summenstromwandler, mit 3 eine Sekundärwicklung des Summenstromwandlers 2, mit 4 ein Auslöserelais, mit 5 ein Schaltwerk, mit 6 eine Prüfeinrichtung, mit 7 eine Trenneinrichtung, mit 8 ein Schaltschloß, mit 9 eine Drucktaste und mit 10 eine Stromversorgungseinrichtung bezeichnet.

In der Figur sind die Prüfeinrichtung 6 und die Stromversorgungseinrichtung 10 als separate Einrichtungen ausgeführt. Selbstverständlich kann die Stromversorgungseinrichtung auch als Bestandteil der Prüfeinrichtung ausgeführt werden.

Auf der linken Seite sind die mit dem Versorgungsnetz zu verbindenden Anschlüsse angeordnet, wohingegen auf der rechten Seite der Zeichnung die zu den Verbrauchern führenden Anschlüsse dargestellt sind. Der in der Figur gezeigte Fehlerstromschutzschalter ist für ein Vierleiternetz dargestellt. Das Prinzip der Erfindung ist hiervon aber völlig unabhängig, d.h. die Erfindung ist ebensogut auf ein Dreileiter- oder ein Zweileiternetz anwendbar.

Die Leitungen L₁, L₂, L₃ und N gemäß der Figur laufen allesamt über in der Figur nicht gezeigte Primärwicklungen des Summenstromwandlers 2, so daß die Sekundärwicklung 3 des Summenstromwandlers 2 stromlos ist, solange von den Verbrauchern derselbe Strom zurückfließt wie er ihnen zugeführt wird, da sich dann die entgegengerichteten Felder aufheben. Beim Auftreten eines Fehlerstromes, d.h. eines Stromes, der nicht über einen der Leiter L₁, L₂, L₃ oder N zurückfließt, unterscheiden sich dann die aufgebauten Felder voneinander, so daß sie sich nicht mehr gegenseitig aufheben und ein entsprechender Strom in der Sekundärwicklung 3 des Summenstromwandlers 2 induziert wird.

Das Auslöserelais 4 ist an die Anschlüsse der Sekundärwicklung 3 des Summenstromwandlers 2 angeschlossen. Bei Erzeugung eines Stromes in der Sekundärwicklung, der den Auslösestrom des Auslöserelais 4 überschreitet und bei einem Fehlerstrom von 50% bis 100% des Nennfehlerstroms auftritt, löst dann das Auslöserelais 4 aus und betätigt hierdurch in herkömmlicher Weise das Schaltschloß 8, von welchem wiederum das Schaltwerk 5 zur Abschaltung des Fehlerstromschutzschalters 1 gebracht wird. Das Schaltschloß 8 kann über die Drucktaste 9 gespannt werden, wobei das Schaltwerk 5 geschlossen wird.

Hinter dem Schaltwerk 5 greift die Stromversorgungseinrichtung 10 die Netzspannung ab und setzt sie in eine versorgungsspannung für die Prüfeinrichtung 6 um. Durch das Abgreifen der Netzspannung hinter dem Schaltwerk 5, d.h. auf der verbraucherseitigen Seite des Schaltwerkes 5, wird somit die Stromzufuhr zu der Prüfeinrichtung 6 abgeschaltet, wenn das Schaltwerk 5 den Fehlerstromschutzschalter 1 abschaltet. Durch diese Maßnahme ist die Prüfeinrichtung 6 stets über den Einschaltzustand des Fehlerstromschutzschalters 1 informiert.

Die Prüfeinrichtung 6 führt in vorbestimmten Zeitabschnitten automatisch eine Prüfung der Funktionsfähigkeit des Auslöserelais 4 durch. Die Prüfeinrichtung 6 ist zu der Sekundärwicklung 3 bzw. zu dem Auslöserelais 4 parallel geschaltet. Alternativ hierzu kann die Prüfeinrichtung aber auch mit einer zweiten Sekundärwicklung und/oder mit einer zweiten Spule des Auslöserelais verbunden sein, wie in der DE 195 29 474 C1 gezeigt.

Zur Funktionsprüfung des Fehlerstromschutzschalters 1 werden dem Auslöserelais 4 von der Prüfeinrichtung 6 nacheinander einzelne Ansteuerimpulse zugeführt, deren Amplitude von Ansteuerimpuls zu Ansteuerimpuls zunimmt. An jeden dieser Ansteuerimpulse schließt sich ein Rückholimpuls an, wobei nach Zuführung jedes Ansteuerimpulses auch überwacht wird, ob sich der Anker des Auslöserelais 4 gegenüber dem Joch des Auslöserelais 4 bewegt hat. In diesem Fall ändert sich der magnetische Fluß durch das Joch und den Anker, was zu einem entsprechenden Gegenimpuls bzw. Induktionsimpuls in der Erregerspule des Auslöserelais 4 führt, der wiederum mittels der Prüfeinrichtung 6 detektiert wird. Wird ein entsprechender Gegenimpuls bzw. Induktionsimpuls, der ein Anheben des Ankers zeigt, ermittelt, wird die Abgabe von Ansteuerimpulsen an das Auslöserelais 4 gestoppt und beurteilt, ob das Auslöserelais 4 bei dem richtigen Stromwert angesprochen hat. Der Anker wird dabei nur so wenig bewegt, daß er durch den nachfolgenden Rückholimpuls in seiner Ruhelage gehalten bzw. in diese zurückgeholt wird. Das Schaltschloß 8 wird dabei nicht betätigt. Bei dieser Prüfung kann ein vom Netz verursachter Grundfehlerstrom berücksichtigt werden.

Stellt die Prüfeinrichtung 6 fest, daß das Auslöserelais 4 ordnungsgemäß arbeitet, wiederholt es den Prüfvorgang nach einem vorbestimmten Zeitintervall, das beliebig zwischen einem Tag und mehreren Monaten gewählt werden kann.

Stellt die Prüfeinrichtung 6 dagegen fest, daß das Auslöserelais 4 nicht bei einem vorbestimmten Stromwert reagiert, gibt sie ein Warnsignal ab. Mittels dieses Warnsignals wird eine in der Figur nicht dargestellte Warneinrichtung aktiviert.

Die Aktivierung dieser Warneinrichtung zeigt dem Betreiber der durch den Fehlerstromschutzschalter 1 geschützten Anlage an, daß eine Funktionsbeeinträchtigung des Fehlerstromschutzschalters 1 vorliegt. Da üblicherweise zwischen dem Auftreten einer solchen Funktionsbeeinträchtigung und dem völligen Ausfall des Fehlerstromschutzschalters 1, der zu einer irreversiblen Abschaltung des Fehlerstromschutzschalters 1 führt, ein längerer Zeitraum liegt, bleibt dem Betreiber der mittels des Fehlerstromschutzschalters 1 geschützten Anlage genügend zeit, den Fehlerstromschutzschalter 1 auszuwechseln. Dieser Zeitraum reicht im allgemeinen aus, einen für den Betrieb der Anlage günstigen Zeitpunkt für die Auswechslung des Fehlerstromschutzschalters zu wählen. Die Warneinrichtung kann wahlweise als Leuchtdiode und/oder akustische Einrichtung ausgeführt sein. Alternativ hierzu kann das Warnsignal auch an eine externe Zentrale weitergegeben werden.

Ist die Prüfeinrichtung 6 dagegen nicht mit der Durchführung des Funktionstests des Auslöserelais 4 beschäftigt, ermittelt sie fortlaufend einen an der Sekundärwicklung 3 des Summenstromwandlers 2 auftretenden Fehlerstrom. Stellt die Prüfeinrichtung 6 dabei fest, daß der ermittelte Fehlerstrom einen Wert überschreitet, der zur Auslösung des Fehlerstromschutzschalters 1 führen müßte, aktiviert sie einen in der Figur nicht gezeigten Zeitgeber. Sobald die Prüfeinrichtung 6 mittels des Zeitgebers feststellt, daß ein erstes zeitintervall nach Auftreten eines unzulässig hohen Fehlerstromes abgelaufen ist, und der Fehlerstromschutzschalter 1 nicht abgeschaltet hat, führt sie ihrerseits dem Auslöserelais 4 einen Strom zu, der den von der Sekundärwicklung 3 des Summenstromwandlers 2 zugeführten Fehlerstrom übersteigt, um hierdurch das Auslöserelais 4 zu aktivieren. Stellt sie nach Verstreichen eines weiteren Zeitintervalles fest, daß der Fehlerstromschutzschalter 1 immer noch nicht abgeschaltet hat, schließt die Prüfeinrichtung 6 hieraus, daß entweder das Auslöserelais 4 oder das Schaltschloß 8 oder das Schaltwerk 5 funktionsunfähig ist und führt dementsprechend eine irreversible Abschaltung des Fehlerstromschutzschalters 1 mit Hilfe der Trenneinrichtung 7 durch.

Wird dagegen vor Ablaufen des folgenden Zeitintervalles der Fehlerstromschutzschalter abgeschaltet, fällt die Netzspannung hinter dem Schaltwerk 5 ab, so daß die Stromzufuhr zu der Prüfeinrichtung 6 abgeschaltet wird, so daß keine irreversible Abschaltung des Fehlerstromschutzschalters 1 veranlaßt wird. Fällt die Netzspannung darüber hinaus vor Verstreichen des ersten Zeitintervalles ab, wird von der Prüfeinrichtung 6 auch keine reversible Abschaltung des Fehlerstromschutzschalters 1 veranlaßt.

Die Trenneinrichtung 7 kann die irreversible Abschaltung entweder durch das Sprengen einer Mikrokapsel, durch das Durchschneiden der Versorgungsleitungen oder auf andere Art und Weise erzielen. Trenneinrichtungen dieser Art sind aus dem Stand der Technik bekannt.

Die Trenneinrichtung 7 kann auch an einer anderen Stelle des Fehlerstromwandlers angeordnet sein, d.h. sie kann nach dem Summenstromwandler oder nach dem Schaltwerk angeordnet sein.

Die Zeitgebereinrichtung der Prüfeinrichtung 6 kann einen herkömmlichen Zähler umfassen, der nach Erreichen eines ersten Zählwertes feststellt, daß das erste Zeitintervall abgelaufen ist, und bei Erreichen eines zweiten Zählwertes feststellt, daß das zweite Zeitintervall abgelaufen ist. Alternativ hierzu können zwei unabhängige Zähleinrichtungen gestartet werden, wenn mittels der Prüfeinrichtung ermittelt wird, daß ein Fehlerstrom auftritt.

## Patentansprüche

1. Fehlerstromschutzschalter (1) mit
(a) einem Summenstromwandler (2),
(b) einem mit einer Sekundärwicklung (3) des Summenstromwandlers verbundenen Auslöserelais (4),
(c) einem Schaltwerk (5) zur Abschaltung der dem Fehlerstromschutzschalter nachgeschalteten Verbraucher bei Betätigung des Auslöserelais,
und
(d) einer Prüfeinrichtung (6)
(d1) die prüft, ob dem Auslöserelais von der Sekundärwicklung ein einen Grenzwert übersteigender Fehlerstrom zugeführt wird und die eine reversible Abschaltung des Fehlerstromschutzschalters veranlaßt, wenn der Fehlerstromschutzschalter nicht innerhalb eines ersten Zeitintervalles nach Auftreten eines unzulässig hohen Fehlerstromes abgeschaltet hat, indem sie dem Auslöserelais einen zusätzlichen Strom zuführt, der den von der Sekundärwicklung zugeführten Strom übersteigt, und
(d2) die eine irreversible Abschaltung des Fehlerstromschutzschalters mittels einer Trenneinrichtung (7) veranlaßt, wenn der Fehlerstromschutzschalter nicht innerhalb eines zweiten Zeitintervalles nach Beendigung des ersten Zeitintervalles abgeschaltet hat.

2. Fehlerstromschutzschalter nach Anspruch 1,
**dadurch gekennzeichnet, daß**
die Prüfeinrichtung in vorbestimmten Zeitabschnitten automatisch die Funktionsfähigkeit des Auslöserelais überprüft, ohne dabei den Schutzschalter zu betätigen.

3. Fehlerstromschutzschalter nach Anspruch 2,
**dadurch gekennzeichnet, daß**
die Prüfeinrichtung außerhalb der Zeiten, zu denen sie die Funktionsfähigkeit des Auslöserelais prüft, fortlaufend prüft, ob dem Auslöserelais von der Sekundärwicklung ein primärseitiger Fehlerstrom zugeführt wird.

4. Fehlerstromschutzschalter nach einem der vorhergehenden Ansprüche,
**dadurch gekennzeichnet, daß**
die Prüfeinrichtung die irreversible Abschaltung des Fehlerstromschutzschalters veranlaßt, indem sie mittels der Trenneinrichtung (7) die durch den Fehlerstromschutzschalter zu schaltenden Leitungen sprengt, durchschneidet oder auf sonstige Weise irreversibel unterbricht.

5. Fehlerstromschutzschalter nach einem der vorhergehenden Ansprüche,
**gekennzeichnet durch**
eine Stromversorgungseinrichtung (10), die die Netzspannung von dem Schaltwerk gesehen verbraucherseitig abgreift und die der Prüfeinrichtung eine Versorgungsspannung anlegt.

6. Fehlerstromschutzschalter nach Anspruch 5,
**dadurch gekennzeichnet, daß**
die Prüfeinrichtung anhand des Anliegens der Versorgungsspannung prüft, ob der Fehlerstromschutzschalter abgeschaltet hat oder nicht.

7. Fehlerstromschutzschalter nach einem der Ansprüche 2 bis 6,
**dadurch gekennzeichnet, daß**
ein Warnsignal abgegeben wird, sobald die Prüfeinrichtung ermittelt, daß das Auslöserelais nicht mehr bei einem vorbestimmten Fehlerstrom auslöst.

8. Fehlerstromschutzschalter nach Anspruch 7,
**gekennzeichnet durch** eine Warneinrichtung, die **durch** das Warnsignal aktiviert wird und die anzeigt, daß der Fehlerstromschutzschalter ausgetauscht werden muß.

## Claims

1. Earth leakage circuit breaker (1) with
(a) a summation current transformer (2),
(b) a trip relay (4) connected with the summation current transformer,
(c) a switching device (5) for switching off the consumer connected after the earth leakage circuit breaker when the tripping relay is tripped, and
(d) a tester device (6)
(d1) which tests whether a fault current exceeding a threshold value is fed to tripping relay from the secondary winding and which causes a reversible switching-off of the earth leakage circuit breaker if the earth leakage circuit breaker has not switched off within a first time interval following the occurrence of an unacceptably high fault current, in that it feeds an additional current to the tripping relay which exceeds the current fed from the secondary winding, and
(d2) which causes an irreversible switching-off of the earth leakage circuit breaker by means of an cutting device if the earth leakage circuit breaker has not switched off within a second time interval following the end of the first time interval.

2. Earth leakage circuit breaker in accordance with claim 1, **characterised in that** the tester device automatically tests the functioning of the tripping relay at predetermined time intervals without operating the circuit breaker.

3. Earth leakage circuit breaker in accordance with claim 2, **characterised in that**, outside of the times when it tests the functioning of the tripping relay, the tester device continually tests whether a primary-side fault current is being fed to the tripping relay from the secondary winding.

4. Earth leakage circuit breaker in accordance with one of the preceding claims, **characterised in that** the tester device causes the irreversible switching-off of the earth leakage circuit breaker **in that**, by means of the cutting device (7), it ruptures, cuts through or otherwise irreversibly breaks the cables which are to be connected via the earth leakage circuit breaker.

5. Earth leakage circuit breaker in accordance with one of the preceding claims, **characterised in that** a power supply device (10) which picks up the network voltage on the consumer side, as seen from the switching device, and applies a supply voltage to the tester device.

6. Earth leakage circuit breaker in accordance with claim 5, **characterised in that** the tester device tests whether or not the earth leakage circuit breaker has switched off on the basis of the presence of the supply voltage.

7. Earth leakage circuit breaker in accordance with claims 2 to 6, **characterised in that** a warning signal is generated as soon as the tester device determines that the tripping relay is no longer tripped at a predetermined fault current.

8. Earth leakage circuit breaker in accordance with claim 7, **characterised by** a warning device which is activated by a warning signal and which indicates that the earth leakage circuit breaker needs to be replaced.

## Revendications

1. Disjoncteur (1) de protection contre les courants de défaut comprenant
(a) un transformateur différentiel (2),
(b) un relais de déclenchement (4) relié à un enroulement secondaire (3) du transformateur différentiel (2),
(c) un dispositif de coupure (5) pour couper les charges montées en aval du disjoncteur de protection contre les courants de défaut lors de l'actionnement du relais de déclenchement, et
(d) un dispositif de contrôle (6)
(d1) qui contrôle si le relais de déclenchement reçoit de l'enroulement secondaire un courant de défaut dépassant une valeur limite et qui provoque une coupure réversible du disjoncteur de protection contre les courants de défaut lorsque le disjoncteur de protection contre les courants de défaut n'a pas coupé en l'espace d'un premier intervalle de temps après apparition d'un courant de défaut d'intensité inadmissible, en envoyant au relais de déclenchement un courant supplémentaire dépassant le courant que ce dernier reçoit de l'enroulement secondaire et
(d2) qui provoque une coupure irréversible du disjoncteur de protection contre les courants de défaut au moyen d'un dispositif de sectionnement (7) lorsque le disjoncteur de protection contre les courants de défaut n'a pas coupé en l'espace d'un deuxième intervalle de temps après la fin du premier intervalle de temps.

2. Disjoncteur de protection contre les courants de défaut selon la revendication 1,
**caractérisé par le fait que**
le dispositif de contrôle contrôle, à des intervalles de temps prédéterminés, automatiquement la capacité de fonctionnement du relais de déclenchement sans actionner pour cela le disjoncteur de protection.

3. Disjoncteur de protection contre les courants de défaut selon la revendication 2,
**caractérisé par le fait que**
le dispositif de contrôle, en dehors des périodes pendant lesquelles il contrôle la capacité de fonctionnement du relais de déclenchement, contrôle continuellement si le relais de déclenchement reçoit de l'enroulement secondaire un courant de défaut côté primaire.

4. Disjoncteur de protection contre les courants de défaut selon l'une des revendications précédentes,
**caractérisé par le fait que**
le dispositif de contrôle provoque la coupure irréversible du disjoncteur de protection contre les courants de défaut en interrompant à l'aide du dispositif de sectionnement les puissances à couper de façon irréversible par explosion, par sectionnement de conducteurs ou d'une autre manière.

5. Disjoncteur de protection contre les courants de défaut selon l'une des revendications précédentes,
**caractérisé par**
un dispositif d'alimentation en courant (10) qui prélève la tension du réseau du côté des charges par rapport au dispositif de coupure et applique une tension d'alimentation au dispositif de contrôle.

6. Disjoncteur de protection contre les courants de défaut selon la revendication 5,
**caractérisé par le fait que**
le dispositif de contrôle contrôle, en détectant si la tension d'alimentation est appliquée, si le disjoncteur de protection contre les courants de défaut a coupé ou non.

7. Disjoncteur de protection contre les courants de défaut selon l'une des revendications 2 à 6,
**caractérisé par le fait qu'**un signal avertisseur est émis dès que le dispositif de contrôle a déterminé que le relais de déclenchement ne déclenche plus en présence d'un courant de défaut prédéterminé.

8. Disjoncteur de protection contre les courants de défaut selon la revendication 7,
**caractérisé par** un dispositif avertisseur qui est activé par le signal avertisseur et qui indique que le disjoncteur de protection contre les courants de défaut doit être remplacé.
